# DEMANDE DE BREVET EUROPEEN

(11) **EP 2 200 285 A1**
(43) Date de publication de la demande: **23.06.2010**
(21) Numéro de dépôt: 08305957.6
(22) Date de dépôt: 17.12.2008
(51) Int. Cl.: H04N 5/445, H04B 5/00

(54) **Système de transmission dynamique d'une information liée à un programme télévisé entre deux terminaux**

(71) Demandeur: Gemalto SA, 92190 Meudon (FR)
(72) Inventeur: Botuha, Stéphane, 83140 Six Fours les plages (FR); Fine, Jean-Yves, 13006 MARSEILLE (FR)
(74) Mandataire: Scheer, Luc

(57) **Abrégé**

L'invention concerne un système de transmission dynamique d'une information liée à un programme télévisé entre un premier terminal (10) comprenant un écran de visualisation du programme télévisé et un second terminal portable (19).

Selon l'invention, le premier terminal (10) comprend :
- un décodeur (13) de l'information transmise pendant la diffusion du programme télévisé ;
- une interface de communication sans contact (18) recevant l'information transmise pendant la diffusion du programme télévisé et destinée à transmettre sans fil cette information au second terminal portable (19).

## Description

Le domaine de l'invention est celui de la transmission de données entre un terminal comprenant un écran de visualisation d'un programme télévisé, typiquement un poste de télévision, et un terminal portable.

Lors de la transmission d'un programme télévisé, par exemple d'une publicité pour un produit, il est fréquent que des coordonnées téléphoniques ou une adresse Internet d'un service à contacter, par exemple un service consommateur, apparaissent à l'écran. Le téléspectateur peut, après avoir contacté ce service, obtenir plus de renseignements sur ce produit ou simplement l'acheter. Il peut par exemple s'agir de produits disponibles uniquement par correspondance, de places pour un évènement tel qu'un match de football ou un concert. Il peut également s'agir d'une bande annonce relative à un film ou une émission prévue plus tard dans la journée ou dans les jours qui suivent. Les informations alors affichées sont le jour et l'heure de la transmission de ce film ou cette émission.

L'inconvénient de cette solution est que le téléspectateur doit pouvoir noter rapidement sur un papier les coordonnées inscrites sur l'écran pendant la page de publicité relative au produit ou au service concerné par la publicité car celles-ci disparaissent dès que la publicité de ce produit ou service se termine. Il est également à noter que ces informations n'apparaissent généralement à l'écran qu'à la fin de la publicité, et ce subrepticement. De plus, le risque de noter des informations erronées est important, comme celui d'égarer le papier sur lequel elles ont été inscrites.

Le téléspectateur ne peut alors avoir accès aux renseignements qui l'intéressent et, pour l'annonceur, cela se traduit par la perte potentielle d'un client (qui devra attendre une retransmission de cette publicité, le crayon et le papier à portée de la main, pour ne pas manquer à nouveau la notation des informations qui l'intéressent).

La présente invention a notamment pour objectif de remédier à ces inconvénients.

Plus précisément un des objectifs de l'invention est de fournir un système permettant à un téléspectateur d'enregistrer rapidement et sans erreur possible les informations relatives à un programme télévisé, pendant la diffusion de ce programme télévisé.

Cet objectif, ainsi que d'autres qui apparaîtront par la suite, est atteint grâce à un système de transmission dynamique d'une information liée à un programme télévisé entre un premier terminal comprenant un écran de visualisation du programme télévisé et un second terminal portable, le premier terminal comprenant :
- un décodeur de l'information transmise pendant la diffusion du programme télévisé ;
- une interface de communication sans contact recevant l'information transmise pendant la diffusion du programme télévisé et destinée à transmettre sans fil cette information au second terminal portable.

Préférentiellement, le premier terminal comporte en outre un récepteur infrarouge destiné à recevoir des commandes de changement de programme transmises par une télécommande infrarouge, le récepteur infrarouge pilotant le décodeur pour que celui-ci transmette à l'interface de communication sans contact une information dynamique liée au programme télévisé diffusé sur l'écran en temps réel.

Avantageusement, l'interface de communication sans contact comporte une antenne de type tag.

Dans un mode de réalisation préférentiel, l'information transmise pendant la diffusion du programme télévisé est véhiculée sur un canal DVB-T.

Préférentiellement, le second terminal portable est apte à recevoir des programmes télévisés de type DVBH et communiquer en html.

Dans un mode de réalisation avantageux, le premier terminal est un poste de télévision.

L'interface de communication sans contact est préférentiellement positionnée derrière l'écran du premier terminal et sa lecture par le second terminal portable s'effectue en positionnant le second terminal portable contre l'écran.

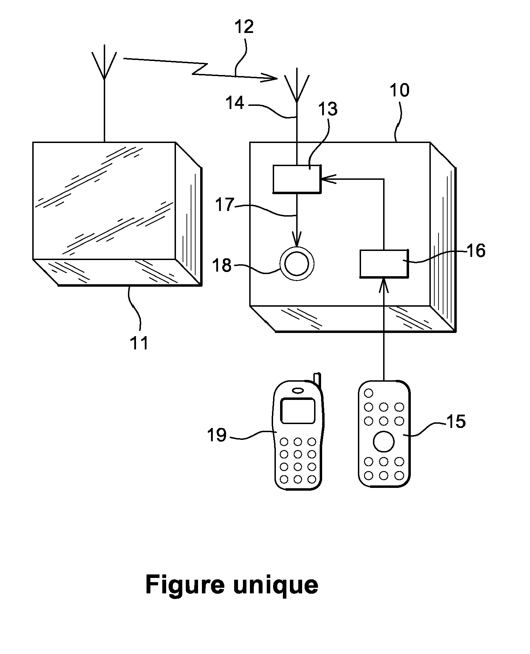

D'autres caractéristiques et avantages de l'invention apparaîtront à la lecture de la description suivante d'un mode de réalisation préférentiel de l'invention, donné à titre illustratif et non limitatif, et de la figure unique annexée qui est une représentation du système selon l'invention.

Sur cette figure, un terminal 10, appelé par la suite premier terminal, comportant un écran non représenté, reproduit une émission télévisée transmise par un émetteur distant 11. La transmission de l'émission est préférentiellement réalisée sur un canal 12 en DVB-T (Digital Video Broadcasting - Terrestrial en anglais pour « diffusion vidéo numérique terrestre» en français), exploité notamment par la TNT (Télévision Numérique Terrestre), ou en DVB-H (Digital Video Broadcasting - Handset en anglais pour « diffusion vidéo numérique terminal portable» en français).

Le premier terminal 10 comporte un tuner ou décodeur 13 relié à une antenne de réception 14. Le programme visualisé sur l'écran et sélectionné par l'utilisateur à l'aide d'une télécommande infrarouge 15 pilotant un récepteur infrarouge 16, ce dernier envoyant des commandes de sélection de programmes au tuner 13.

L'invention a pour particularité de prévoir la transmission, à partir de l'émetteur distant 11, d'informations relatives aux différents programmes pouvant être visualisées sur le premier terminal 10. Comme déjà indiqué précédemment, ces informations peuvent être, dans le cas d'annonces d'émissions à venir, les jours et horaires de diffusion de ces émissions, ou dans le cas de publicités, des numéros de téléphone ou d'adresses Internet correspondant à des services clients. Ces informations sont diffusées en même temps que les programmes télévisés auxquels ils font référence. Ceci signifie que pour chaque programme télévisé, ou tout le moins pour chaque programme télévisé pour lequel une information est disponible, cette information est disponible tout le long de la diffusion de ce programme. À chaque programme correspond ainsi une information qui lui est relative.

Le tuner 13 a pour fonction de démoduler et éventuellement décoder non seulement l'émission en cours de diffusion mais également l'information qui lui est attachée. Cette information est transmise via un APDU à une interface de communication sans contact 18. Cette interface de communication sans contact 18 comporte préférentiellement une antenne de type tag, destinée à communiquer l'information relative au programme en cours à un terminal portable 19, par exemple constitué par un téléphone de type GSM comprenant une carte Sim ou Usim. Le terminal portable 19 comporte avantageusement une interface de type NFC apte à recevoir les informations relatives au programme diffusé en parallèle sur l'écran du premier terminal 10. Ces informations seront ensuite stockées soit dans le terminal portable 19, soit dans sa carte Sim ou Usim.

La réception de ces informations par le terminal portable 19 est par exemple obtenue en approchant le terminal portable 19 de l'interface de communication sans contact 18, par exemple placée juste derrière l'écran du premier terminal 10. Donc, en pratique, si un téléspectateur est intéressé par les informations relatives au programme qu'il visualise sur l'écran du premier terminal 10, il lui suffit d'approcher son téléphone portable d'une zone de l'écran de ce terminal 10, derrière laquelle est positionnée l'interface de communication sans contact 18, pour récupérer et stocker ces informations. Il n'y a donc plus de risques de noter des informations erronées et le téléspectateur peut re-accéder à ces informations lorsqu'il le souhaite.

Un cas pratique est par exemple celui d'un téléspectateur regardant dans un restaurant, sur un téléviseur, un match de football également diffusé sur Internet. En quittant le restaurant, il approche son téléphone portable de l'écran du téléviseur pour recopier l'URL de l'émission qu'il va pouvoir continuer à regarder une fois rentrée chez lui. A cet effet, le second terminal portable 19 est préférentiellement apte à recevoir des programmes télévisés de type DVB-H et communiquer en html (ce qui permet à son utilisateur de poursuivre le déroulement du match sur son téléphone portable).

Comme déjà indiqué, les informations transmises à l'interface de communication sans fil 18 sont statiques pendant la durée d'une émission donnée. Celles-ci ne sont plus disponibles à la fin de l'émission ou alors si, à l'aide de la télécommande infrarouge 15, le programme visualisé est changé. Les informations relatives au nouveau programme sélectionné et reproduit à l'écran, si elles existent, seront alors sélectionnées par le tuner 13 est transmises à l'interface de communication sans fil 18.

La description qui précède a été donnée à simple titre illustratif et non limitatif et l'homme du métier imaginera aisément d'autres modes de mise en oeuvre de la présente invention entrant dans le cadre des revendications.

## Revendications

1. Système de transmission dynamique d'une information liée à un programme télévisé entre un premier terminal (10) comprenant un écran de visualisation dudit programme télévisé et un second terminal portable (19), ledit premier terminal (10) comprenant :
- un décodeur (13) de ladite information transmise pendant la diffusion dudit programme télévisé ;
- une interface de communication sans contact (18) recevant ladite information transmise pendant la diffusion dudit programme télévisé et destinée à transmettre sans fil cette information audit second terminal portable (19).

2. Système selon la revendication 1, **caractérisé en ce que** ledit premier terminal (10) comporte en outre un récepteur infrarouge (16) destiné à recevoir des commandes de changement de programme transmises par une télécommande infrarouge (15), ledit récepteur infrarouge (16) pilotant ledit décodeur (13) pour que celui-ci transmette à ladite interface de communication sans contact (18) une information dynamique liée au programme télévisé diffusé sur ledit écran en temps réel.

3. Système selon l'une des revendications 1 et 2, **caractérisé en ce que** ladite interface de communication sans contact (18) comporte une antenne de type tag.

4. Système selon l'une des revendications 1 à 3, **caractérisé en ce que** ladite information transmise pendant la diffusion dudit programme télévisé est véhiculée sur un canal DVB-T (12).

5. Système selon l'une des revendications 1 à 4, **caractérisé en ce que** ledit second terminal portable (19) est apte à recevoir des programmes télévisés de type DVBH et communiquer en html.

6. Système selon l'une des revendications 1 à 5, **caractérisé en ce que** ledit premier terminal (10) est un poste de télévision.

7. Système selon l'une des revendications 1 à 6, **caractérisé en ce que** ladite interface de communication sans contact (18) est positionnée derrière l'écran dudit premier terminal (10) et que sa lecture par ledit second terminal portable (19) s'effectue en positionnant ledit second terminal portable (19) contre ledit écran.
